# EUROPEAN PATENT APPLICATION

(11) **EP 4 606 518 A1**
(43) Date of publication of application: **27.08.2025**
(21) Application number: 24750043.2
(22) Date of filing: 23.01.2024
(51) Int. Cl.: B23Q 5/54, B23Q 1/28, B23Q 1/48, B23Q 1/54, B23Q 11/00, B23Q 16/10, F16D 49/14, F16D 55/00

(54) **ROTATION CONTROL DEVICE FOR ROCKER, AND MACHINE TOOL USING SAME**

(30) Priority: 31.01.2023 JP 2023012690
(71) Applicant: DMG Mori Co., Ltd., Yamatokoriyama-shi, Nara 639-1160 (JP)
(72) Inventor: HATANAKA, Norimichi, Yamatokoriyama-shi, Nara 639-1160 (JP); NISHIKI, Takahiro, Yamatokoriyama-shi, Nara 639-1160 (JP); SHIRATSUKAYAMA, Yasumitsu, Yamatokoriyama-shi, Nara 639-1160 (JP); HIGUCHI, Yosuke, Yamatokoriyama-shi, Nara 639-1160 (JP); KOBAYASHI, Akihito, Yamatokoriyama-shi, Nara 639-1160 (JP)
(74) Representative: Isarpatent
(86) International application number: PCT/JP2024/001783
(87) International publication number: WO 2024/162091

(57) **Abstract**

A rotation control apparatus 100 for an oscillating unit C that controls a rotation angle of the oscillating unit C for supporting a table T to which a workpiece is attached, about a first rotation axis A, includes: a rotating shaft 1 extending along the first rotation axis A and having an attachment end 11 to which the oscillating unit C is attached; a rotary motor 2 including: a rotor 21 fixed to a side surface portion of the rotating shaft 1; and a stator 22 disposed outward of the rotor and coaxial with the rotor 21; and a first brake mechanism 3 located on the attachment end 11 side relative to the rotating shaft 1 and configured to act on the attachment end 11 side of the rotating shaft 1.

## Description

### Technical field

The present invention relates to an oscillating unit rotation control apparatus that controls a rotation angle of an oscillating unit, which supports a table to which a workpiece is attached, about a first rotation axis.

### Background Art

For example, to reduce the number of setup changes and perform more flexible machining, a five-axis processing machine has been proposed that has not only three linear axes but also two rotation axes in a drive mechanism. As described in Patent Document 1, for example, the five-axis processing machine includes a spindle head configured to be movable along three linear axes in X, Y, and Z directions, a rotary table to which a workpiece is attached and that is rotatable about a C-axis, an oscillating unit that supports the rotary table, and an oscillating unit rotation control apparatus that rotates the oscillating unit about an A-axis and controls the rotation angle thereof to a predetermined angle.

The oscillating unit includes a flat support section on which the rotary table is provided, and a pair of flat connection sections standing in parallel from respective ends of the support section. At least one of the connection sections is fixed to an end of a rotating shaft of the oscillating unit rotation control apparatus.

The oscillating unit rotation control apparatus is such that the rotating shaft is driven by a direct drive motor, and is configured to perform indexing to maintain the rotation angle of the oscillating unit fixed to the predetermined angle, and synchronous control to change the rotation angle of the oscillating unit in synchronization with the movement of the spindle head.

When indexing the rotation angle of the oscillating unit, for example, the rotation of the rotating shaft is fixed by a brake mechanism located at an end of the rotating shaft on the side opposite to the end connected to the oscillating unit. The brake mechanism includes, for example, a brake disk located at the end of the rotating shaft and expanding radially outward, and a hydraulically driven piston that presses the brake disk against a predetermined pressure surface to exert a braking force.

Here, if the rotating shaft is fixed by such a brake mechanism and machining is performed under severe machining conditions such as heavy cutting with the rotation angle of the oscillating unit indexed, the oscillating unit may vibrate, making it difficult to achieve required machining accuracy.

### Citation List

### Patent Document

Patent Document 1: JP 2022-025174A

### Summary of Invention

### Technical Problem

The present invention has been made in view of the foregoing problem, and aims to provide an oscillating unit rotation control apparatus that can make it unlikely for the oscillating unit to vibrate during cutting with the oscillating unit indexed at a predetermined angle.

### Solution to Problem

That is, an oscillating unit rotation control apparatus according to the present invention is an oscillating unit rotation control apparatus that controls a rotation angle of an oscillating unit for supporting a table to which a workpiece is attached, about a first rotation axis, the apparatus including: a rotating shaft extending along the first rotation axis and having an attachment end to which the oscillating unit is attached; a rotary motor including: a rotor fixed to a side surface portion of the rotating shaft; and a stator disposed outward of the rotor and coaxial with the rotor; and a first brake mechanism located on the attachment end side relative to the rotating shaft and configured to act on the attachment end side of the rotating shaft.

With this, the first brake mechanism is configured to act on the attachment end side of the rotating shaft on which the oscillating unit is attached. This makes it possible to reduce the distance from the workpiece that generates a cutting load to the first brake and to increase the torsional rigidity of the entire oscillating unit rotation control apparatus compared to a case where the brake acts at a location far away from a workpiece as in a conventional technology. Accordingly, the first brake mechanism can suppress vibration of the oscillating unit or the workpiece even when heavy cutting is performed, for example, making it possible to improve machining accuracy and machining efficiency.

As an arrangement of the first brake mechanism suitable for increasing overall torsional rigidity, for example, at least a part of the first brake mechanism is located closer to the attachment end than the stator.

To maintain the rotation angle of the oscillating unit indexed to a desired angle and enable cutting while achieving high torsional rigidity, it is preferable that the first brake mechanism is configured to act with the oscillating unit indexed to a predetermined angle.

To exhibit a large braking force while making the first brake mechanism compact and easily increase the torsional rigidity, it is preferable that the first brake mechanism includes; a brake shoe configured to come into contact with and separate from the side surface portion of the rotating shaft; and a first hydraulic chamber formed outward of the brake shoe and configured to be supplied with hydraulic pressure for deforming the brake shoe toward the side surface portion of the rotating shaft.

To increase the area in which the brake shoe acts on the rotating shaft to the extent possible within a limited space and easily exert the braking force, it is preferable that at least a part of the brake shoe is located between the side surface portion of the rotating shaft and the stator.

To increase the distance from the first rotation axis to the point where the braking force of the first brake mechanism acts and make it possible to increase the braking torque, it is preferable that, of the side surface portion of the rotating shaft, a portion facing the first brake mechanism has an external dimension larger than a portion to which the rotor is fixed.

To increase the bending rigidity of the entire oscillating unit and rotation control apparatus, it is preferable that the oscillating unit rotation control apparatus further includes a first bearing located on the attachment end side relative to the rotating shaft and rotatably supporting the rotating shaft, wherein the first brake mechanism is located inward of the first bearing as viewed along the first rotation axis. Further, with this configuration, the first bearing is located closer to the oscillating unit than the first brake mechanism. Thus, even if the first bearing fails, replacement work or the like can be easily performed, and maintainability can be improved.

To increase the number of locations where the brakes act while making the oscillating unit rotation control apparatus itself compact to make it possible to further improve the braking force, it is preferable that the oscillating unit rotation control apparatus further includes a second brake mechanism located at an opposite end on a side opposite to the attachment end side relative to the rotating shaft and configured to act on the opposite end of the rotating shaft.

To make it possible to prevent the occurrence of vibrations even during cutting with a higher processing load, it is preferable that the second brake mechanism is configured to further act while the first brake acts.

To increase the distance from the first rotation axis to the point where the braking force of the second brake mechanism acts to the extent possible and facilitate the increase of the braking torque, it is preferable that the second brake mechanism includes: an approximately annular or disk-shaped brake disk attached to the opposite end of the rotating shaft and expanding outward of the rotating shaft; a piston configured to come into contact with and separate from a face plate portion of the brake disk; and a second hydraulic chamber configured to be supplied with hydraulic pressure for switching, by moving the piston, between an acting state where the piston holds the brake disk between the piston and a predetermined pressing surface and an open state where the piston is separated from the brake disk.

To support the rotating shaft together with the first bearing between two points to make it possible to increase the bending rigidity of the entire oscillating unit and also reduce the overall external dimensions along the first axial direction even when the second brake mechanism is provided, it is preferable that the oscillating unit rotation control apparatus further includes a second bearing located at the opposite end relative to the rotating shaft and rotatably supporting the rotating shaft, wherein at least a part of the second brake mechanism is disposed next to the second bearing and outward thereof along a radial direction of the second bearing.

To make it possible to quickly discharge heat generated from the coil while facilitating power supply to the coil in the oscillating unit rotation control apparatus, it is preferable that the rotor is a permanent magnet, the stator is a coil, and a coolant supply space configured to be supplied with a coolant is formed radially outward of the stator.

A machine tool according to the present invention is a machine tool including: the oscillating unit; a pair of the oscillating unit rotation control apparatuses; and a spindle configured to be movable, wherein the oscillating unit includes: a support section supporting the table; and a pair of connection sections connecting the support section and the oscillating unit rotation control apparatuses, and the oscillating unit rotation control apparatuses are attached to the connection sections in one-to-one correspondence. With this, the first brake mechanism can be disposed near each of the two connection sections of the oscillating unit, making it possible to further increase the torsional rigidity of the oscillating unit. Accordingly, this machine tool can favorably perform machining with a high machining load such as heavy cutting.

If the table is configured to be rotatable about a second axis extending in a direction different from the first rotation axis, the workpiece fixed to the table can assume more various orientations, which makes it possible to increase the flexibility of machining and reduce the number of setup changes. Further, if a fitting structure is formed between the attachment end of the rotating shaft and each of the connection sections of the oscillating unit, and the oscillating unit is fixed to the attachment end by the fitting structure, it is easy to strongly fix the oscillating unit to the rotating shaft and to increase the torsional rigidity.

### Advantageous Effects of Invention

Thus, with the oscillating unit rotation control apparatus according to the present invention, the first brake mechanism is configured to act on the attachment end side of the rotating shaft on which the oscillating unit is attached. This makes it possible to reduce the distance from the workpiece that generates a cutting load to the first brake and to increase the torsional rigidity as a whole compared to a conventional technology. Accordingly, even when heavy cutting is performed on the workpiece, events in which vibration or the like leads to deterioration of machining accuracy can be made unlikely to occur.

### Brief Description of Drawings

FIG. 1 is a schematic perspective view of an oscillating unit rotation control apparatus according to a first embodiment of the present invention, and a machine tool including the same.
FIG. 2 is a schematic view of the oscillating unit rotation control apparatus, an oscillating unit, and a rotary table according to the first embodiment connected to each other.
FIG. 3 is a schematic view of the oscillating unit rotation control apparatus, the oscillating unit, and the rotary table according to the first embodiment before being connected to each other.
FIG. 4 is a schematic cross-sectional view of an internal structure of the oscillating unit rotation control apparatus according to the first embodiment.
FIG. 5 is a schematic enlarged cross-sectional view of a first brake mechanism of the oscillating unit according to the first embodiment.
FIG. 6 is a schematic enlarged cross-sectional view of a second brake mechanism of the oscillating unit according to the first embodiment.
FIG. 7 is a schematic view of an oscillating unit rotation control apparatus, an oscillating unit, and a rotary table according to a second embodiment before being connected to each other.

### Description of Embodiments

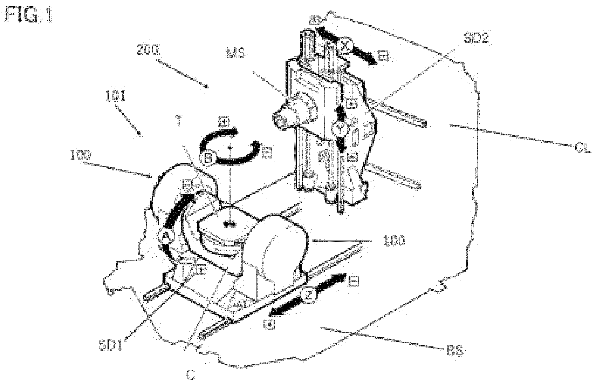

A rotation control apparatus 100 for an oscillating unit C according to the first embodiment of the present invention, and a machine tool 200 including the same will be described below with reference to FIGS. 1 to 5.

The machine tool 200 according to the first embodiment is a five-axis machine tool in which a workpiece and a tool can be moved relative to three orthogonal axes in X-, Y-, and Z-axis directions, and the orientation of the workpiece can be changed by rotating the workpiece about an A-axis, which is a first rotation axis A, and a B-axis, which is a second rotation axis B, as shown in FIG. 1.

The machine tool 200 is configured as a horizontal machining center such that the tool faces the horizontal direction. A direction that the tool faces is defined as a Z-axis. A movement direction in which the tool moves and that intersects perpendicularly with the Z-axis in the horizontal direction is defined as an X-axis. A movement direction in which the tool moves and that intersects perpendicularly with the Z-axis in the vertical direction is defined as a Y-axis. In the initial state, the first rotation axis A having an axis line parallel to the X-axis is defined as an A-axis, and the second rotation axis B having an axis line parallel to the Y-axis is defined as a B-axis.

The following is an overview of each mechanism. The machine tool 200 of the first embodiment includes a bed BS extending in the Z-axis direction and a column CL standing in the Y-axis direction relative to the bed BS.

A pair of guide surfaces extending in the Z-axis direction are formed on the bed BS, and a first saddle SD1 for moving the workpiece in the Z-axis direction is provided on the guide surfaces. The first saddle SD1 is controlled so as to be at a predetermined position relative to the Z-axis direction of the workpiece by a Z-axis direction drive mechanism (not shown) that includes a ball screw, a servo motor, and the like. An AB-axis unit 101 for rotating the workpiece about the A-axis and the B-axis is mounted on the first saddle SD1. The AB-axis unit 101 includes a table T to which the workpiece is fixed and that is configured to be rotatable about the B-axis, an oscillating unit C that supports the table T, and a pair of rotation control apparatuses 100 that rotate the oscillating unit C about the A-axis and control the rotation angle thereof.

A pair of guide surfaces extending in the X-axis direction are formed on a side surface of the column CL, and a second saddle SD2 is provided on the guide surfaces. The second saddle SD2 is controlled so as to be at a predetermined position relative to the X-axis direction by an X-axis direction drive mechanism (not shown) that includes a ball screw, a servo motor, and the like. The second saddle SD2 includes a Y-axis direction drive mechanism for driving, in the Y-axis direction, a spindle head MS, to which the tool is attached facing the Z-axis direction, and controlling it to a predetermined position.

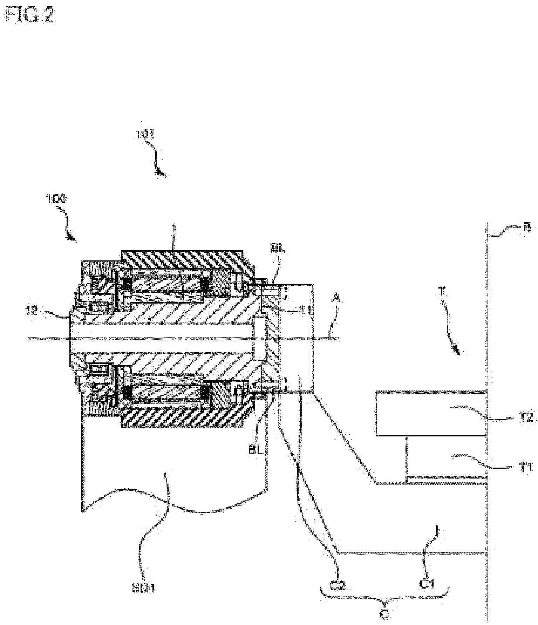

Next, the AB-axis unit 101 will be described in detail with reference to FIGS. 1 and 2. The table T includes a B-axis rotation mechanism T1 located on the oscillating unit C side, and a table plate T2 that is located above the B-axis rotation mechanism T1 and has an approximately rectangular plate shape. The workpiece is fixed onto the table plate T2 using a predetermined jig or the like.

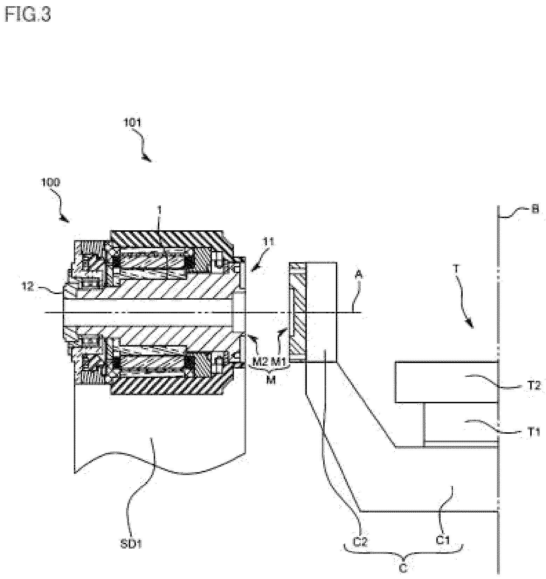

The oscillating unit C supporting the table T is a cradle-like member having an approximate U-shape in a side view, and includes a flat support section C1 supporting the table T and a pair of connection sections C2 standing from two ends of the support section C1. As shown in FIG. 2, each connection section C2 is fixed to a later-described rotating shaft 1 of a corresponding rotation control apparatus 100 by bolts BL, for example, and the orientation of the oscillating unit C changes about the A-axis as a result of a rotation of the rotating shaft 1. Note that the AB-axis unit 101 in FIG. 2 has a substantially left-right symmetrical structure, and only the left half is shown for ease of viewing. As shown in FIG. 3, a fitting structure M is formed between an attachment end 11 of the rotating shaft 1 and the connection section C2 of the oscillating unit C. An engaging recess M1 formed in the connection section C2 and an engaging protrusion M2 formed at a central portion of the attachment end 11 are fitted to each other and supported, thereby also achieving the fixing of each member. With a change in the orientation of the oscillating unit C, the orientations of the table T supported by the oscillating unit C and the workpiece fixed to the table T can also be changed about the A-axis. That is, the orientation of the workpiece can be changed about the A-axis by the oscillating unit C, and can be changed about the B-axis by the rotation of the table plate T2.

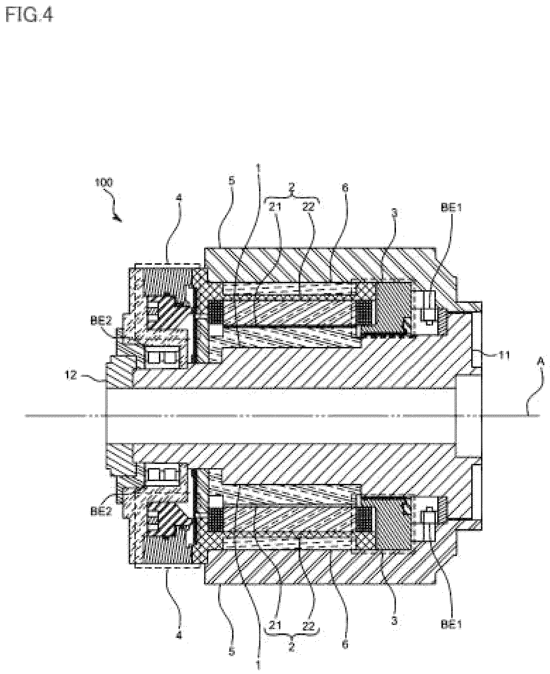

Next, details of the rotation control apparatus 100 will be described with reference to FIGS. 4 to 6. Each rotation control apparatus 100 is configured to index the rotation angle of the rotating shaft 1, to which the connection section C2 of the oscillating unit C is fixed, by a so-called direct drive motor to a desired angle, and perform synchronous control to control the rotation angle of the rotating shaft 1 in synchronization with the movement of the spindle head MS. In the first embodiment, one rotation control apparatus 100 is provided at each end of the oscillating unit C, and the rotation control apparatuses 100 at the two ends are the same. The following is a detailed description of one rotation control apparatus 100.

The rotation control apparatus 100 includes the rotating shaft 1 that extends along the A-axis, which is the first rotation axis A, as shown in FIG. 4, and has the attachment end 11 to which the oscillating unit C is attached, and a rotary motor 2 that includes a rotor 21 fixed to a side surface portion of the rotating shaft 1 and a stator 22 disposed outward of the rotor 21. The rotation control apparatus 100 also includes a first bearing BE1 and a first brake mechanism 3 on the attachment end 11 side relative to the rotating shaft 1, and a second bearing BE2 and a second brake mechanism 4 on an opposite end 12 side opposite to the attachment end 11 side relative to the rotating shaft 1. Further, the rotation control apparatus 100 includes a body 5 for housing each member and a cooling mechanism 6 for dissipating heat generated from the rotary motor 2, on the outer side of the stator 22.

Details of each part of the rotation control apparatus 100 will be described below. As shown in FIG. 2, the rotation control apparatus 100 has a structure that is approximately axially symmetric with respect to the A-axis. As shown in FIG. 4, the rotating shaft 1 has an approximately multistage cylindrical shape whose external dimensions increase along the A-axis from the opposite end 12 side to the attachment end 11 side. The two ends are rotatably supported about the A-axis by the first bearing BE1 located on the attachment end 11 side and the second bearing BE2 located on the opposite end 12 side. Here, the first bearing BE1 and the second bearing BE2 are configured to be capable of receiving both loads in a thrust direction and a radial direction. The rotating shaft 1 is hollow. The hollow portion is in communication with an internal cavity of the oscillating unit C and is used to pass a power cable, a hydraulic pipe, or the like from the support section C1 of the oscillating unit C to the table T.

The rotary motor 2 is disposed at a central portion on a side surface portion of the rotating shaft 1. In the first embodiment, the rotor 21 is a permanent magnet fixed in a ring shape to the side surface portion of the rotating shaft 1, and the stator 22 includes a core and a coil located outward of the rotor 21 and facing the permanent magnet. The rotary motor 2 is controlled such that the rotation angle of the rotating shaft 1 becomes a command angle set by a user based on the output of a rotor 21ly encoder (not shown).

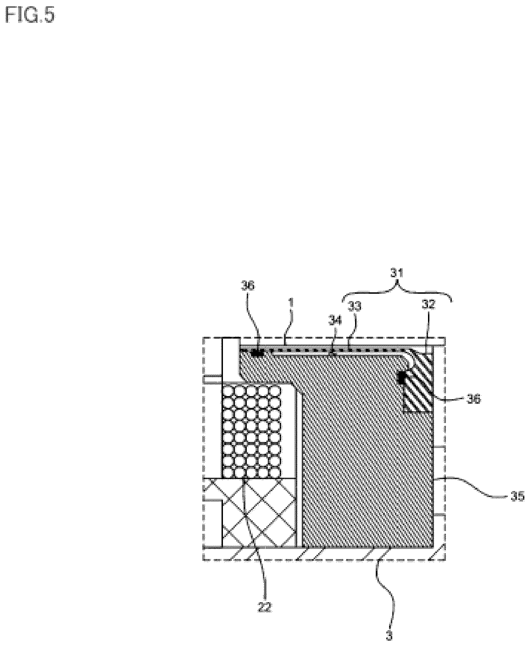

The first brake mechanism 3 acts to brake the rotation of the rotating shaft 1 about the A-axis in a state where the rotating shaft 1 is controlled and the rotation angle of the oscillating unit C is indexed to a predetermined angle, and maintains this state, for example. Note that the term "braking" here is a concept that includes not only completely stopping the rotation of the rotating shaft 1 but also generating a predetermined rotational resistance while rotating the rotating shaft 1 using the rotary motor 2. As shown in FIG. 2, the first brake mechanism 3 is disposed on the attachment end 11 side of the rotating shaft 1, and is disposed between the rotary motor 2 and the first bearing BE1. As shown in an enlarged view of FIG. 5, the first brake mechanism 3 includes a brake shoe 31 that comes into contact with and separates from the side surface portion of the rotating shaft 1, and a first hydraulic chamber 34 that is formed outward of the brake shoe 31 and supplied with hydraulic pressure to deform the brake shoe 31 toward the side surface portion of the rotating shaft 1.

The brake shoe 31 has an approximately thin-walled cylindrical shape, and includes a lug 32 expanding radially outward of the rotating shaft 1, and an elastically deformable section 33 that is a thin-walled section extending from the inner diameter side of the lug 32 along the axial direction of the rotating shaft 1. An annular flange body 35 is provided such that gaps are formed between the flange body 35 and the outer peripheral portion of the elastically deformable section 33, and the first hydraulic chamber 34 is formed in the gaps. Specifically, O-rings 36 are disposed between the flange 35 and the brake shoe 31 on the attachment end 11 side and the opposite side so as to seal the aforementioned gaps, and the first hydraulic chamber 34 is formed by crushing the O-rings 36. Here, the first hydraulic chamber 34 may alternatively be formed by means of various types of welding, instead of the O-rings 36.

The flange body 35 has a larger thickness dimension than the elastically deformable section 33. When hydraulic pressure is supplied into the first hydraulic chamber 34, the elastically deformable section 33 of the brake shoe 31 is deformed toward the rotating shaft 1 and pressed against the side surface portion of the rotating shaft 1. That is, the first brake mechanism 3 is a hydraulically driven brake, and generates braking force and braking torque based on frictional force by directly pressing, in the radial direction, a portion of the rotating shaft 1 that has larger external dimensions. Further, the brake shoe 31 and a part of the flange body 35 are disposed between the rotating shaft 1 and the stator 22. Thus, the area of the brake shoe 31 in which it faces the rotating shaft 1 is increased to the extent possible to facilitate the exertion of the braking force without increasing the dimensions of the rotation control apparatus 100 in the A-axis direction.

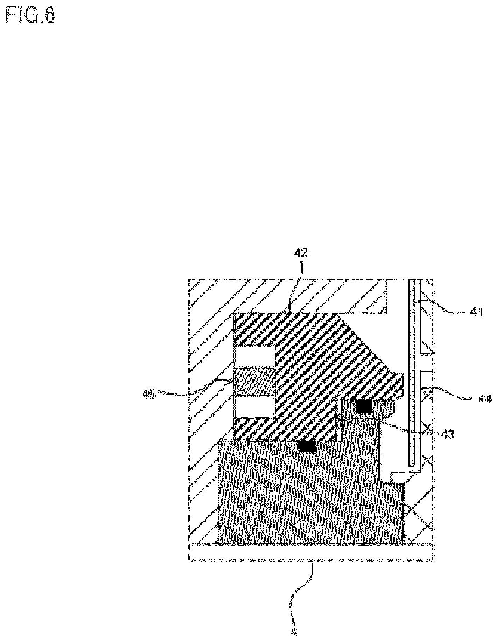

The second brake mechanism 4 is configured to further act while the first brake acts. The second brake mechanism 4 is provided together with the second bearing BE2 at the opposite end 12 of the rotating shaft 1 and is disposed radially outward of the second bearing BE2. More specifically, as shown in FIGS. 4 and 6, the second brake mechanism 4 is attached to the opposite end 12 of the rotating shaft 1, and includes an approximately annular or disk-shaped brake disk 41 expanding outward of the rotating shaft 1, a piston 42 that comes into contact with and separates from a face plate portion of the brake disk 41, and a second hydraulic chamber 43 that is supplied with hydraulic pressure for switching, by moving the piston 42, between an acting state where the piston 42 holds the brake disk 41 between the piston 42 and a predetermined pressing surface and an open state where the piston 42 is separated from the brake disk 41.

The piston 42 is caused by a spring 45 to constantly press the brake disk 41 against a pressed surface 44. As a result of the hydraulic pressure being supplied to the second hydraulic chamber 43, the spring 45 is compressed to separate the piston 42 from the brake disk 41.

In each rotation control apparatus 100 for the oscillating unit C of the first embodiment configured as described above, the first brake mechanism 3 is located on the attachment end 11 side of the rotating shaft 1 to which the connection section C2 of the oscillating unit C is fixed. Thus, the separation distance between two braking points acting in the rotation direction about the A-axis as the entire AB-axis unit 101 can be made shorter than in the conventional technique. It is therefore possible to increase the torsional rigidity of the AB-axis unit 101 about the A-axis while each first brake mechanism 3 exerts the braking force, compared to the conventional technique. Accordingly, even if machining with a high machining load such as heavy cutting is performed with the rotation angle of the workpiece about the A-axis indexed to a predetermined angle, it is possible to prevent torsional vibration from occurring in the AB-axis unit 101.

Furthermore, the first brake mechanism 3 uses hydraulic pressure to directly press a portion of the rotating shaft 1 that has large external dimensions using the brake shoes 31 to generate direct frictional force on the rotating shaft 1 and brake. This enables a large braking force or braking torque to be generated. Further, the braking force is also generated by the second brake mechanism 4 while the first brake mechanism 3 generates the braking force. This can make it less likely that the rotating shaft 1 will rotate. These also help to increase the torsional rigidity of the AB-axis unit 101 during the braking action.

The first bearing BE1 is located closer to the attachment end 11 than the first brake mechanism 3, and the weights of the oscillating unit C, the table T, and the workpiece are supported by the first bearing BE1. This configuration can also increase the bending rigidity of the AB-axis unit 101 and reduce the amount of deformation in the vertical direction to the extent possible.

Further, while the rotation control apparatus 100 for the oscillating unit C of the first embodiment has compact dimensions in the axial direction, the torsional rigidity and bending rigidity of the AB-axis unit 101 can be increased.

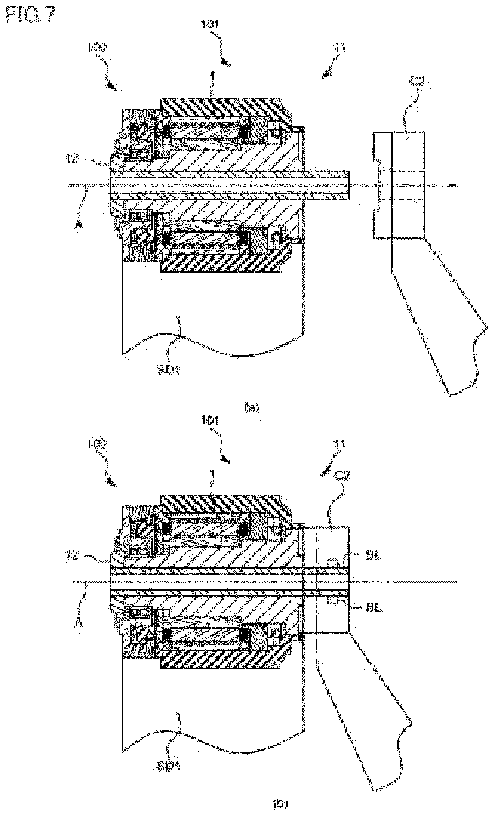

Other embodiments are described. The fitting structure M of the AB-axis unit 101 according to the second embodiment of the present invention may be such that the rotating shaft 1 and the connection section C2 are fixed to each other with the engaging protrusion M1 that is a fitting shaft protruding toward the oscillating unit C at the attachment end 11 of the rotating shaft 1, and the engaging recess M2 that is a fitting hole formed in the connection section C2 of the oscillating unit C, as shown in FIG. 7. For example, the fitting shaft may be fixed from the radial direction by a bolt BL or the like while being inserted into the fitting hole.

Although a horizontal machining center is employed in the first embodiment, the oscillating unit rotation control apparatus according to the present invention may also be used in a vertical machining center. The oscillating unit is not limited to one supported at both ends by a pair of rotation control apparatuses, and may also be one supported at only one end by the rotation control apparatus. Even when the oscillating unit is supported at both ends, a configuration may be employed in which the rotation angle is controlled by the rotation control apparatus on one side, and the other side is rotatably supported by a bearing or the like without being provided with the rotation control apparatus.

The first brake mechanism is not limited to the configuration described in the first embodiment. For example, a brake disk may be used in a manner similar to the second brake mechanism, or an electromagnetic brake may also be used. The same applies to the second brake mechanism. In addition, the second brake mechanism may be omitted, and only the first brake may be located on the attachment end side of the rotating shaft.

In the first embodiment, the first bearing is disposed closer to the attachment end than the first brake mechanism, but the first brake mechanism may alternatively be disposed closer to the attachment end than the first bearing.

The first rotation axis and the second rotation axis are not limited to the A-axis and the B-axis, respectively, and may be other rotation axes defined in the machine tool. That is, the names of the A-axis, B-axis, and C-axis may be changed as appropriate in accordance with the orientation of the tool of the machine tool.

The table may be one that does not have a rotating function. That is, the oscillating unit rotation control apparatus according to the present invention may also be applied to a machine tool for performing four-axis machining. In addition, the oscillating unit rotation control apparatus according to the present invention may be applied to not only a machine tool that performs only removal machining, but also a machine tool that can also perform additional machining.

Other variations of various embodiments and combinations of parts of the embodiments may be made without departing from the gist of the invention.

### List of Reference Numerals

200 ... Machine tool
100 ... Rotation control apparatus
101 ... AB-axis unit
1 ... Rotating shaft
11 ... Attachment end
12 ... Opposite end
2 ... Rotary motor
21 ... Rotor
22 ... Stator
3 ... First brake mechanism
31 ... Brake shoe
34 ... First hydraulic chamber
4 ... Second brake mechanism
41 ... Brake disk
42 ... Piston
43 ... Second hydraulic chamber
44 ... Pressure surface
C ... Oscillating unit
T ... Table
A ... A-axis (first rotation axis)
B ... B-axis (second rotation axis)

## Claims

1. An oscillating unit rotation control apparatus that controls a rotation angle of an oscillating unit for supporting a table to which a workpiece is attached, about a first rotation axis, the apparatus comprising:
a rotating shaft extending along the first rotation axis and having an attachment end to which the oscillating unit is attached;
a rotary motor including: a rotor fixed to a side surface portion of the rotating shaft; and a stator disposed outward of the rotor and coaxial with the rotor; and
a first brake mechanism located on the attachment end side relative to the rotating shaft and configured to act on the attachment end side of the rotating shaft.

2. The oscillating unit rotation control apparatus according to claim 1,
wherein at least a part of the first brake mechanism is located closer to the attachment end than the stator.

3. The oscillating unit rotation control apparatus according to claim 1,
wherein the first brake mechanism is configured to act with the oscillating unit indexed to a predetermined angle.

4. The oscillating unit rotation control apparatus according to claim 1,
wherein the first brake mechanism includes;
a brake shoe configured to come into contact with and separate from the side surface portion of the rotating shaft; and
a first hydraulic chamber formed outward of the brake shoe and configured to be supplied with hydraulic pressure for deforming the brake shoe toward the side surface portion of the rotating shaft.

5. The oscillating unit rotation control apparatus according to claim 4,
wherein at least a part of the brake shoe is located between the side surface portion of the rotating shaft and the stator.

6. The oscillating unit rotation control apparatus according to claim 1,
wherein, of the side surface portion of the rotating shaft, a portion facing the first brake mechanism has an external dimension larger than a portion to which the rotor is fixed.

7. The oscillating unit rotation control apparatus according to claim 1, further comprising:
a first bearing located on the attachment end side relative to the rotating shaft and rotatably supporting the rotating shaft,
wherein the first brake mechanism is located inward of the first bearing as viewed along the first rotation axis.

8. The oscillating unit rotation control apparatus according to claim 1, further comprising:
a second brake mechanism located at an opposite end on a side opposite to the attachment end side relative to the rotating shaft and configured to act on the opposite end of the rotating shaft.

9. The oscillating unit rotation control apparatus according to claim 8,
wherein the second brake mechanism is configured to further act while the first brake mechanism acts.

10. The oscillating unit rotation control apparatus according to claim 8,
wherein the second brake mechanism includes:
an approximately annular or disk-shaped brake disk attached to the opposite end of the rotating shaft and expanding outward of the rotating shaft;
a piston configured to come into contact with and separate from a face plate portion of the brake disk; and
a second hydraulic chamber configured to be supplied with hydraulic pressure for switching, by moving the piston, between an acting state where the piston holds the brake disk between the piston and a predetermined pressing surface and an open state where the piston is separated from the brake disk.

11. The oscillating unit rotation control apparatus according to claim 8, further comprising:
a second bearing located at the opposite end relative to the rotating shaft and rotatably supporting the rotating shaft,
wherein at least a part of the second brake mechanism is disposed next to the second bearing and outward thereof along a radial direction of the second bearing.

12. The oscillating unit rotation control apparatus according to claim 1,
wherein the rotor is a permanent magnet,
the stator is a coil, and
a coolant supply space configured to be supplied with a coolant is formed radially outward of the stator.

13. A machine tool according to any one of claims 1 to 12 comprising:
the oscillating unit;
a pair of the oscillating unit rotation control apparatuses; and
a spindle configured to be movable,
wherein the oscillating unit includes:
a support section supporting the table; and
a pair of connection sections connecting the support section and the oscillating unit rotation control apparatuses, and
the oscillating unit rotation control apparatuses are attached to the connection sections in one-to-one correspondence.

14. The machine tool according to claim 13,
wherein the table is configured to be rotatable about a second axis extending in a direction different from the first rotation axis.

15. The machine tool according to claim 13,
wherein a fitting structure is formed between the attachment end of the rotating shaft and each of the connection sections of the oscillating unit, and
the oscillating unit is fixed to the attachment end by the fitting structure.
